# EUROPEAN PATENT APPLICATION

(11) **EP 4 653 330 A1**
(43) Date of publication of application: **26.11.2025**
(21) Application number: 25175735.7
(22) Date of filing: 12.05.2025
(51) Int. Cl.: B65B 7/28, B65B 57/04, G01N 21/84, G01N 21/90, G06V 20/52, H04N 23/56, B65B 3/00

(54) **APPARATUS AND CORRESPONDING METHOD FOR MONITORING A MEDICAL CONTAINER**

(30) Priority: 13.05.2024 IT 202400010675
(71) Applicant: I.M.A. Industria Macchine Automatiche S.p.A, 40064 Ozzano dell'Emilia (BO) (IT)
(72) Inventor: Dall'Aglio, Andrea, 40026 Imola (BO) (IT)
(74) Representative: Petraz, Gilberto Luigi

(57) **Abstract**

An apparatus (10) for monitoring a plurality of containers (100) shaped as hollow cylindrical bodies with a respective top opening (101) is described, wherein the apparatus comprises a support member (500) comprising a plurality of retaining seats (501) configured to receive the plurality of containers (100) which have respective retaining portions (400) lying on a first plane (P1), said containers (100) are filled with a product and closed by corresponding closure elements (300) which are placed within the hollow cylindrical bodies in a position such as to divide the latter into a first empty portion (100a) above the closure element (300) and a second filled portion (100b) below the closure element (300). The apparatus (10) comprises detection means (12) comprising an image detector (18) and a telecentric lens (19) for acquiring an axonometric image of the containers (100) and of the closure elements (300) placed therein.

## Description

### FIELD OF THE INVENTION

The present invention concerns an apparatus and a method for automatically monitoring a container, such as for example a syringe, a bottle or suchlike, in a line for packaging a medical liquid. In particular, the apparatus and method according to the present invention are applied to detect at least the presence of a stopper for closing the container and, therefore, that the medical liquid is correctly packaged in the container.

### BACKGROUND OF THE INVENTION

In the field of packaging medical liquids, whether solutions, medicines, medical devices or other, it is known to put these liquids within containers, usually transparent, such as syringes, bottles or suchlike, hermetically closed by means of closure stoppers.

For the purposes of optimizing production, it is known to process groups of tens, or even hundreds, of containers retained in an orderly manner according to an orderly arrangement by corresponding support trays, known by the English term "nest", and arranged in coordinated containers, known as "tubs", which are moved progressively and sequentially between the various operating stations provided for a correct packaging.

Since these are medical products, one of the main requirements is to carry out a check to verify the presence of the stoppers in the containers, to guarantee the correct and effective closure of each individual container in order to guarantee the integrity both of the dosage and also of the health efficacy of the medical liquid contained. At the end of this verification check, any defective containers are rejected.

To carry out this check, it is known to provide monitoring apparatuses downstream of the container capping operations, which provide for a lateral inspection of the containers. However, these operations are very complex, providing for a row-by-row extraction of the containers from the support nests, so as to work around the dense arrangement they assume inside the support nests. In any case, with this known technique it is particularly difficult to identify the capping of the central containers precisely, because they are progressively covered by those arranged in the outermost lateral rows.

Since these are medical products, a random check is not allowed, nor is it allowed to have differentiated quality levels for checking the containers in relation to their position in the nest.

This type of check is mainly necessary downstream of the machines that fill and seal the containers without extracting them from the support nests.

To date, in order to verify the presence of the stoppers it is known to use a camera that frames the containers from above; however, since the stoppers are arranged on a plane more distant, normally lower, from the detection point compared to a surface plane defined by the nest, there is a display disadvantage substantially hindering the lateral detection, that is, it is particularly difficult to accurately identify the capping of the containers arranged in the lateral rows, since the overall perspective dimensions of the central containers means that they progressively cover the stoppers of the containers arranged in the most lateral rows from the optical control system's view. Moreover, again due to a perspective effect caused by the stoppers' depth of placement, it is possible that, even for the most central containers, a part of the stoppers would remain hidden by the very containers that contain them.

These checks are therefore not effective, unless there are numerous and repeated optical detections, with complex subsequent graphic processing, that is, the use of several cameras, about ten, which can result in an even more complex and expensive system.

Scanning systems are also known, which however provide to detect each container, for example using laser beams, with complex timings and expensive equipment incompatible with the high productivity required by automated packaging systems. In addition, also in this case the detection beam can meet the edges of the container, which obstruct the correct scanning of the stoppers since they are arranged on the plane most distant from the detection point.

Other solutions known in the art are disclosed by US 2017/121046 and US 2023/131211.

US 2017/121046 discloses an aseptic robotic filling system and method, wherein a sensor is configured to perform a pre-fill inspection of containers to determine if any containers are fit for filling, and to locate the openings of the containers in order to guide a filling arm to fill the containers with a product.

US 2023/131211 discloses an apparatus and a method for closing containers and for rejecting defective containers.

In any case, the systems proposed in the state of the art provide for more or less long stops at the monitoring apparatuses, so as to allow the execution of all the various steps of scanning or combined or subsequent detection of the containers, as well as verification graphic processing. These stops result in a corresponding downtime of the plant, or at least the provision of storage units for the containers, in any case leading to a reduction in productivity and an increase in management costs of the packaging plant in which the known apparatus is installed.

There is therefore the need to perfect an apparatus for monitoring a medical container that can overcome at least one of the disadvantages of the state of the art.

To do this, it is necessary to solve the technical problem of correctly and simultaneously checking all the containers at exit from the capping operations.

In particular, one purpose of the present invention is to provide an apparatus and perfect a method for effectively and correctly checking the capping of the containers which can carry out the check substantially in a single step and without needing to stop the container feeding line for a prolonged period.

Another purpose of the present invention is to provide an apparatus and perfect a method that allow for highly efficient monitoring that leads to optimizing checking times so as to achieve high productivity.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the technical problem described above in a new and original way, also achieving considerable advantages compared to the state of the prior art, some embodiments described here concern an apparatus for monitoring a plurality of containers shaped as hollow cylindrical bodies with a respective top opening and supported according to an orderly retention arrangement by a support member, for example shaped as a nest, provided with a plurality of retaining seats configured to receive the plurality of containers. The support member is usually arranged in a coordinated tub and is moved, progressively and in sequence, between the various operating stations of a packaging plant or line.

The containers comprise a retaining portion, configured for example as an annular neck, which engages with a respective retaining seat, for example resting thereon. The retaining portions lie on a first plane, in particular horizontal, wherein the containers are retained suspended, when the containers are received in the respective retaining seats.

In fact, the solution according to the present invention applies to containers, such as syringes, bottles, flasks or suchlike, intended to be filled with a medical product, for example in liquid form. Furthermore, the containers are closed by means of corresponding closure elements, or stoppers, which are placed inside the hollow cylindrical bodies so as to allow the medical product to be preserved correctly until its use by the end user. Each closure element divides the respective hollow cylindrical body in two portions, namely a first empty portion above the closure element and a second portion filled with the medical product below the closure element. Each closure element is located at a given distance from the first plane and is configured to be engaged by a rod of a plunger for slidingly moving it within the hollow cylindrical body.

In accordance with one aspect of the present invention, the apparatus comprises detection means comprising an image detector (for example a detection camera) and a telecentric lens arranged above the support member at a first distance from the first plane and associated with the image detector for detecting an axonometric image of both the containers received into the retaining seats and the closure elements placed in the containers.

In accordance with one aspect of the present invention, the apparatus comprises a controller in data communication with the detection means and configured to detect, based on the acquired image of the containers and the closure elements, whether each container actually has the respective closure element placed therein or not.

The expression "in data communication" is understood as communication that allows to exchange information according to methods known in the art, for example by exploiting the Internet, for example with Ethernet connections, or via wireless communication protocols, such as Bluetooth, other wireless systems that exploit 3G, 4G or 5G networks or any technological evolutions thereof.

With the solution according to the present invention, by exploiting the telecentric lens' property of eliminating the perspective effect, all the containers are detected in the image equally, regardless of whether they are at the center or at the sides of the retention pattern defined by the support member, thus allowing to correctly visualize all the closure elements even if these are inside the containers in a position distanced from the first plane.

In this way, the dimensions of each container and of each closure element appear substantially constant as the distance from the image detector varies.

In other words, an image detected with the detection means according to the present invention is substantially close to an axonometric representation of each container and of each closure element, substantially canceling the dimensional distortion given by the perspective.

Therefore, with the solution according to the present invention it is possible to correctly and simultaneously check all the containers at exit from the capping operations, so as to perform an effective and correct check of the capping of the containers, even in a single step and without needing to stop the container feeding line for a prolonged period.

In accordance with another aspect of the present invention, a method is provided for monitoring a plurality of containers, comprising the following steps:
- providing a support member comprising a plurality of retaining seats for receiving respective retaining portions of the containers, the retaining portions lying on a first plane when the containers are received in the respective retaining seats, each retaining seat receiving a respective container filled with a product and closed by a corresponding closure element, each container being shaped as a hollow cylindrical body with a respective top opening, with the respective closure element placed within the hollow cylindrical body so as to divide the respective hollow cylindrical body in two portions, namely a first empty portion above the closure element and a second filled portion below the closure element, each of the closure elements being located at a given distance from the first plane and configured to be engaged by a rod of a respective plunger for slidingly moving it within the hollow cylindrical body;
- providing detection means comprising an image detector and a telecentric lens associated with the image detector for acquiring an axonometric image of both the containers received into the retaining seats and the closure elements placed in the containers;
- arranging the telecentric lens above the support member at a first distance from the first plane;
- detecting, by means of a controller in data communication with the detection means, based on the acquired image of the containers and the closure elements, whether each container actually has the respective closure element placed therein or not.

### DESCRIPTION OF THE DRAWINGS

These and other aspects, characteristics and advantages of the present invention will become apparent from the following description of some embodiments, given as a non-restrictive example with reference to the attached drawings wherein:

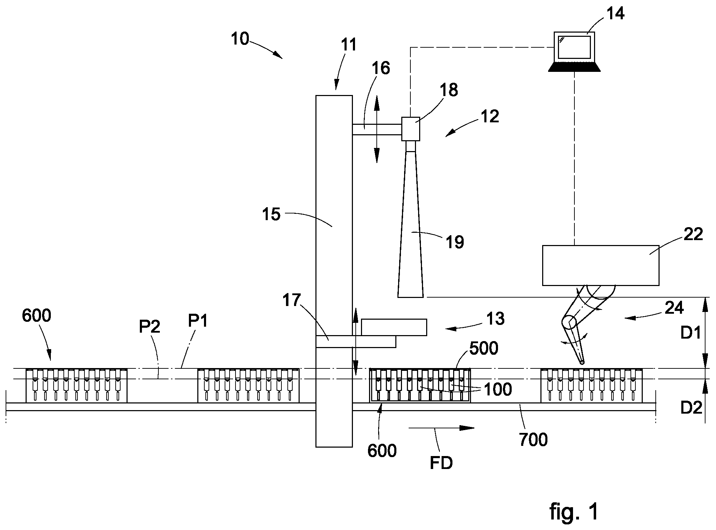

- fig. 1 is a schematic and partly sectioned lateral view of an apparatus according to the present invention for monitoring a medical container;
- fig. 2 is an enlarged view of a detail of the apparatus of fig. 1; and
- fig. 3 is a schematic plan view of an image detected by the apparatus of fig. 1.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

With reference to the attached drawings, an apparatus 10 is described for automatically and simultaneously monitoring a plurality of containers 100, in this specific case hollow cylindrical bodies for syringes (syringe barrels) each equipped with a top opening 101, containing a certain medical product 200, for example a medical liquid, and capped by means of closure elements 300, in this specific case stoppers placed inside the corresponding container and configured to be engaged by a rod of a plunger that slidingly moves them within the hollow cylindrical body in a direction parallel to a longitudinal axis of the container.

The containers 100 are supported in an orderly manner by means of support members 500, in this example configured as a nest provided with a plurality of retaining seats 501, ordered according to a matrix-type arrangement formed by a plurality of rows and columns, each retaining seat being configured to receive a respective container 100.

The support member 500 is in turn positioned in a coordinated receptacle, or tub 600, so that the containers 100 are substantially contained in the tub 600 and retained suspended by the support member 500, in a substantially vertical position, thanks to the support of a retaining portion 400 of the containers, for example shaped to form an annular support neck, on an upper edge of the retaining seats.

The tubs 600 thus prepared are moved continuously along a feeding direction FD, by means of a conveyor belt 700 (only partly schematized in the drawing) forming part of a larger plant, or line, for packaging the medical product 200 in the containers 100.

This arrangement of the containers 100 in the tubs 600, by means of the support member 500, defines a substantially horizontal first plane, or surface plane P1, provided at the retaining portion 400, that is, the first visible surface that is met when viewing the tub 600 from above. Always in this condition of retention of the containers 100, the closure elements 300 lie on a second plane, or detection plane P2, which is lower than the vertical and substantially parallel to the surface plane P1. In particular, the detection plane P2 is arranged at a given distance D2 from the surface plane P1.

This is due to the fact that the closure elements 300 have to be in contact with the medical product 200. In fact, there can be no air between the closure element 300 and the product, that is, the liquid for example, to prevent any air from being introduced into a patient's circulation during injection.

Since the quantity of medical product 200 is dosed, it usually fills half, or one third, or three quarters, of the total capacity of the containers 100, therefore the closure elements 300 lie on the detection plane P2 which is always arranged at a significantly lower vertical height than the surface plane P1 so as to delimit a closed chamber completely filled with the medical product. The closure element 300 is then placed in a position such as to divide the respective hollow cylindrical body 100 in two portions: a first empty portion 100a above the closure element, and a second filled portion 100b below the closure element 300.

It is clear that the apparatus 10 according to the present invention, which we will describe below in this example embodiment, can also be equally and effectively applied to monitor different containers, such as for example bottles, flasks, vials or test tubes, containing a liquid or a solid product, for example powder, which requires an effective and safe capping in order to be marketed. Similarly, the apparatus 10 according to the present invention is also effectively applied in solutions in which the containers are supported and retained in groups with shapes and equipment that differ from those described.

The apparatus 10 according to the present invention substantially comprises a support frame 11 and detection means 12 supported by the support frame 11.

The support frame 11 is further configured to support a light source 13 of the apparatus 10.

The support frame 11 comprises a fixed post 15, arranged substantially vertical and orthogonal to the feeding direction FD. In the attached drawings, the fixed post 15 is substantially simplified only in a lateral view. It is not excluded that the fixed post 15 can have a bridge-like shape, arranged over the conveyor belt 700, without interfering with the feed of the tubs 600. Likewise, it is not excluded that the fixed post 15 can support control equipment, such as for example presence sensors, or transducers, for example to signal the actual passage of the tub 600, for the purposes of the economic management of the apparatus 10.

The support frame 11 also comprises a first positioning arm 16, slidingly mounted on the fixed post 15 and configured to support the detection means 12, thus allowing their position to be adjusted vertically with respect to the surface plane P1.

The support frame 11 further comprises a second positioning arm 17 which is also slidingly mounted on the fixed post 15 and is configured to support the light source 13, so as to keep them at an optimal lighting distance with respect to the surface plane P1.

The possibility of slidingly adjusting the arrangement of the first positioning arm 16 and of the second positioning arm 17 with respect to the fixed post 15 offers the possibility of adjusting both the focus and also the lighting of the containers, in order to further improve the optical conditions of image detection and checking of the stoppers, in particular when the dimensions of the containers to be monitored and/or the quantity of product contained therein change.

Solutions in which the light source is arranged between the surface plane P1 and the detection plane P2, that is, they are in a condition opposite to the detection means 12 with respect to the containers 100 so as to define a backlighting effect thereof, are not excluded.

The detection means 12 are arranged, also thanks to the positioning adjustment allowed by the first positioning arm 16, at a first distance D1 from the surface plane P1.

The first distance D1 is comprised between about 170mm and about 250mm, advantageously from about 200mm to about 220mm, while the second distance D2 is comprised between about 30mm and about 50mm, advantageously equal to about 40mm.

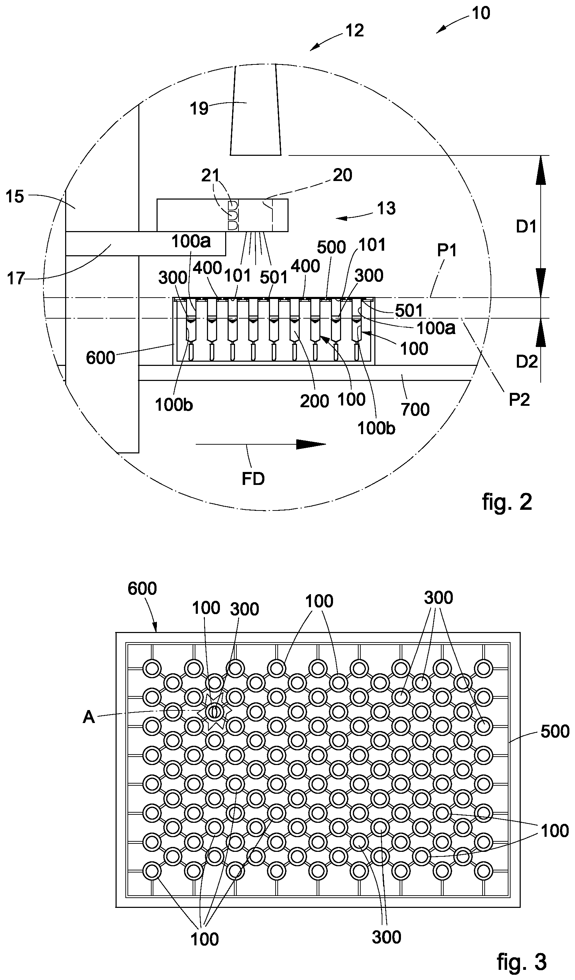

The detection means 12 substantially comprise an image detector 18, for example a camera, configured to detect an image of the containers 100 and of the corresponding closure elements 300, and a telecentric lens 19, associated with the image detector 18, to acquire an axonometric image, that is, a plan view of all the containers 100 supported by the support member 500 (fig. 3), and not a perspective view.

The first distance D1 is referred to the terminal part of the telecentric lens 19, closest to the tubs 600 and, advantageously, the sum of the first distance D1 and the distance D2 substantially corresponds to an optical focus distance of the telecentric lens 19, so that the sharpness of the axonometric image detected is centered on the closure elements 300.

In particular, the image detector 18 is advantageously of the type with an image resolution of 4096 7µm pixels, while the telecentric lens 19 is advantageously of the flat lens type with a magnification capacity comprised between 0.159x and 0.478x.

The light source 13 has an operating arrangement substantially coaxial to the telecentric lens 19, is interposed between the latter and the surface plane P1 and is configured to impinge on at least one portion of the containers 100 in transit in the corresponding tubs 600.

The light source 13 is of the type provided with a detection opening 20 (schematized in fig. 2), arranged aligned with the telecentric lens 19 and through which the latter visually reaches the containers 100 and the corresponding closure elements 300. Furthermore, the light source 13 comprises a plurality of LEDs 21 (schematized in fig. 2) and is configured to emit a desired white light. The latter, after having been reflected by one or more mirrors (not shown), passes through the detection opening 20 so as to reach the containers 100 and the corresponding closure elements 300, the image of which is acquired in that moment by the detection means 12.

In other embodiments, the lighting means can of course also comprise other light sources, other than the aforementioned LEDs 21.

The apparatus 10 comprises a controller 14 which is in data communication with the detection means 12 to process the axonometric image acquired by the telecentric lens 19 and subject it to a qualitative comparison.

This comparison can occur automatically by means of a comparison with a visual sample, or be subjected to an operator's screening who, if necessary, commands the selection of those containers 100 that do not comply with the standards provided. In fig. 3, a closed broken line A is used to precisely highlight a lack of compliance identified between a container 100 and the corresponding closure element 300 detected with the telecentric lens 19.

It is not excluded that the controller 14 can also be in data communication with the light source 13, for example to command its selective actuation as a function of the actual passage of the tub 600 with the containers 100, as possibly indicated by the sensors provided on the fixed element 15 of the support frame 11.

The controller 14 is also in data communication with a discarding unit 22, in which a robotic arm 24 picks up the defective containers 100, that is, those without closure elements 300, based on the information received from the controller 14. By way of example, the robotic arm 24 can comprise an articulated arm equipped with a gripping member at its end, for example comprising a sucker connected to a suction system for picking up the containers 100 to be discarded by means of pneumatic pick-up members well known to the person of skill in the art. Alternatively, equivalent gripping members, for example of a mechanical nature, such as grippers or suchlike, can be provided.

It is clear that modifications and/or additions of parts or steps may be made to the apparatus 10 and to the method as described heretofore, without thereby departing from the field and scope of the present invention, as defined by the claims.

It is also clear that, although the present invention has been described with reference to some specific examples, a person of skill in the art will be able to achieve other equivalent forms of apparatuses and methods for monitoring a plurality of containers, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Apparatus (10) for monitoring a plurality of containers (100) shaped as hollow cylindrical bodies with a respective top opening (101), said apparatus comprising a support member (500) comprising a plurality of retaining seats (501) configured to receive the plurality of containers (100) which have respective retaining portions (400) lying on a first plane (P1) when the containers (100) are received in the respective retaining seats (501), said plurality of containers (100) being filled with a product and closed by means of corresponding closure elements (300) which are placed within the hollow cylindrical bodies, each closure element (300) dividing the respective hollow cylindrical body in two portion, namely a first empty portion (100a) above the closure element (300) and a second filled portion (100b) below the closure element (300), each of said closure elements (300) being located at a given distance (D2) from said first plane (P1) and configured to be engaged by a rod of a respective plunger for slidingly moving it within the respective hollow cylindrical body, said apparatus (10) being **characterized by** further comprising detection means (12) comprising an image detector (18) and a telecentric lens (19), said telecentric lens (19) being arranged above said support member (500) at a first distance (D1) from said first plane (P1) and associated with said image detector (18) for acquiring an axonometric image of both the containers (100) received into the retaining seats (501) and the closure elements (300) placed in the containers, and a controller (14) in data communication with the detection means (12) and configured to detect based on the acquired image of the containers (100) and the closure elements (300) whether each container (100) actually has the respective closure element (300) placed therein or not.

2. Apparatus (10) as in claim 1, **characterized in that** said retaining seats (501) of said support member (500) are distributed in an orderly manner so as to define a matrix formed by a plurality of rows and a plurality of columns, **and in that** said telecentric lens (19) is arranged substantially along a central line with respect to said matrix.

3. Apparatus (10) as in claim 1 or 2, **characterized in that** said telecentric lens (19) is arranged at said first distance (D1), which is chosen so that the telecentric lens (19) can frame the closure elements (300) of the entire plurality of said containers (100) all at once.

4. Apparatus (10) as in any of the preceding claims, **characterized in that** said closure elements (300) lie on a second plane (P2) arranged at said given distance (D2) from said first plane (P1), wherein said first distance (D1) and said given distance (D2) are such that their sum substantially corresponds to an optical focus distance of said telecentric lens (19).

5. Apparatus (10) as in any of the preceding claims, **characterized by** further comprising a light source (13) operatively associated with said detection means (12) and whose light is configured to impinge on at least a portion of said containers (100) and said corresponding closure elements (300).

6. Apparatus (10) as in claim 5, **characterized in that** said light source (13) is operational arranged substantially coaxial to at least said telecentric lens (19) and is interposed between said first plane (P1) and said telecentric lens (19).

7. Apparatus (10) as in any of the preceding claims, **characterized by** further comprising a support frame (11) comprising a fixed post (15) and a positioning arm (16) slidingly mounted on said fixed post (15) and configured to support at least said telecentric lens (19) to adjust said first distance (D1).

8. Apparatus (10) as in claim 7 when it depends on claim 5 or 6, **characterized in that** said light source (13) is slidingly mounted on said fixed post (15) to adjust the distance of said light source (13) from said first plane (P1).

9. Apparatus (10) as in any of the preceding claims, **characterized in that** said controller (14) is further configured to command a discarding unit (22) to pick up from the support member (500) the container/s (100) which is/are lacking the corresponding closure element (300) and bring it/them to a discharge zone.

10. Method for monitoring a plurality of containers (100) comprising the following steps:
- providing a support member (500) comprising a plurality of retaining seats (501) for receiving respective retaining portions (400) of the containers (100), said retaining portions (400) lying on a first plane (P1) when the containers (100) are received in the respective retaining seats (501), each retaining seat (501) receiving a respective container (100) filled with a product and closed by a corresponding closure element (300), each container (100) being shaped as hollow cylindrical body with a respective top opening (101) with the respective closure element (300) placed within the hollow cylindrical body so as to divide the respective hollow cylindrical body in two portion, namely a first empty portion (100a) above the closure element (300) and a second filled portion (100b) below the closure element (300), each of said closure elements (300) being located at a given distance (D2) from said first plane (P1) and configured to be engaged by a rod of a respective plunger for slidingly moving it within the respective hollow cylindrical body;
- providing detection means (12) comprising an image detector (18) and a telecentric lens (19) associated with said image detector (18) for acquiring an axonometric image of both the containers (100) received into the retaining seats (501) and the closure elements (300) placed in the containers;
- arranging said telecentric lens (19) above said support member (500) at a first distance (D1) from said first plane (P1);
- detecting by means of a controller (14) in data communication with the detection means (12) based on the acquired image of the containers (100) and the closure elements (300) whether each container (100) actually has the respective closure element (300) placed therein or not.

11. Method as in claim 10, **characterized in that** said first distance (D1) is chosen so that the telecentric lens (19) can frame the closure elements (300) of the entire plurality of said containers (100) all at once.

12. Method as in claim 10 or 11, **characterized by** further comprising a discarding step wherein the container/s (100) lacking the corresponding closure element/s (300) is/are picked up from the support member (500) by means of a discarding unit (22) controlled by the controller (14), and brought to a discharge zone.
